(19) Europäisches Patentamt

European Patent Office

Office européen des brevets

(11) **EP 0 765 464 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(51) Int Cl.7: **G01C 19/56**

(86) Internationale Anmeldenummer:
**PCT/DE95/00723**

(21) Anmeldenummer: **95920749.9**

(22) Anmeldetag: **02.06.1995**

(87) Internationale Veröffentlichungsnummer:
**WO 95/034798 (21.12.1995 Gazette 1995/54)**

(54) **Drehratensensor**

Angular rate sensor

Capteur de vitesse angulaire

(84) Benannte Vertragsstaaten:
**DE GB**

(30) Priorität: **16.06.1994 DE 4420918**
　　　　　　**13.01.1995 DE 19500800**

(43) Veröffentlichungstag der Anmeldung:
**02.04.1997 Patentblatt 1997/14**

(73) Patentinhaber: **ROBERT BOSCH GMBH**
**70442 Stuttgart (DE)**

(72) Erfinder:
 • **KULCKE, Hans-Martin**
　**D-71032 Böblingen (DE)**
 • **GOETZ, Siegbert**
　**D-70839 Gerlingen (DE)**
 • **LAERMER, Franz**
　**D-70437 Stuttgart (DE)**

 • **OFFENBERG, Michael**
　**D-72076 Tübingen (DE)**
 • **FUNK, Karsten**
　**D-04720 Doebeln (DE)**
 • **SCHILP, Andrea**
　**D-73525 Schwaebisch Gmuend (DE)**

(56) Entgegenhaltungen:
　**JP-A- 5 248 874　　　US-A- 5 025 346**
　**US-A- 5 349 855**

 • **PROCEEDINGS OF THE WORKSHOP ON MICRO ELECTRO MECHANICAL SYSTEMS (ME, FORT LAUDERDALE, FEB. 7 - 10, 1993, Nr. WORKSHOP 6, 7.Februar 1993 INSTITUTE OF ELECTRICAL AND ELECTRONICS ENGINEERS, Seiten 143-148, XP 000366871 BERNSTEIN J ET AL 'A MICROMACHINED COMB-DRIVE TUNING FORK RATE GYROSCOPE'**

## Beschreibung

Die Erfindung betrifft einen Beschleunigungssensor, insbesondere Coriolis-Drehratensensor.

Stand der Technik

Coriolis-Drehratensensoren sind bekannt. Hierzu werden beispielsweise Quartzstimmgabeln, eine Kombination einer schwingenden Trägerstruktur mit kapazitiven Beschleunigungsaufnehmern oder in einer Ebene schwingende Oberflächenstrukturen, die als sogenannte seismische Massen ausgebildet sind, durch Coriolis-Beschleunigungen gegen rücktreibende Biegefedern ausgelenkt. Durch die Coriolis-Beschleunigungen werden die Strukturen aus der Schwingebene ausgelenkt, wodurch eine kapazitive Auswertung der Auslenkung möglich wird. Werden derartige Coriolis-Drehratensensoren in Kraftfahrzeugen eingesetzt, müssen die kapazitiven Beschleunigungsaufnehmer relativ kleine Coriolis-Beschleunigungen, im Bereich bis 10 mg (g gleich Erdbeschleunigung) gegenüber relativ großen Linearbeschleunigungen im Bereich bis 1 g erkennen. Die Ausgrenzung von Linearbeschleunigungen geschieht üblicherweise durch eine Differenzbildung von Kapazitätsunterschieden bei einzelnen Beschleunigungsaufnehmern. Hierdurch können Beschleunigungen, die auf die Beschleunigungsaufnehmer in der gleichen Weise einwirken, rechnerisch eliminiert werden.

Es ist bekannt, durch gegenphasig oszillierende Schwingstrukturen die Beschleunigungssensoren so auszubilden, daß die Coriolisbeschleunigung mit entgegengesetzten Vorzeichen auf die kapazitiven Beschleunigungsaufnehmer einwirkt, so daß durch die oben erwähnte Differenzbildung die drehratenproportionalen Einzelsignale rechnerisch betragsmäßig addiert werden können. Darüber hinaus ist bekannt, die mit den Beschleunigungsaufnehmern erzeugten elektronischen Signale durch phasensensitive Synchrondemodulation so aufzuarbeiten, daß nur die der Schwingfrequenz proportionale Signalkomponente herausgefiltert wird, so daß eine Signalabweichung durch Linearbeschleunigungen zusätzlich unterdrückt werden kann. Bei den bekannten Beschleunigungssensoren ist nachteilig, daß durch die Auslenkung aufgrund von Linearbeschleunigungen eine Verschiebung des Sensorarbeitspunkts und damit der Sensorempfindlichkeit auftritt. Zur Kompensation dieser Arbeitspunktverschiebung infolge der Linearbeschleunigungen sind Lageregelungen der Beschleunigungsaufnehmer notwendig, die das Sensorelement stets in Coriolisbeschleunigungsrichtung in Ruhe halten. Durch eine aktive elektrische Gegenkopplung soll eine Verschiebung des Sensorarbeitspunkts verhindert werden. Es ist jedoch in dem Zusammenhang nachteilig, daß die notwendige Signaldifferenzbildung erst an den Ausgängen der Regelschaltungen durchführbar ist, so daß der Dynamikbereich der Beschleunigungssensoren eingeengt ist und durch die Dynamik der Regelschaltungen Linearitäts- und Gleichtaktfehler auftreten können. Werden die Coriolisbeschleunigungen mit einer sogenannten "out-of-plane" Messung ermittelt, muß für die Lageregelung eine zusätzliche obere Deckelektrode für den Beschleunigungssensor vorgesehen sein, so daß sowohl von unten als auch von oben anziehende elektrostatische Rückhaltekräfte auf die bewegliche seismische Masse ausgeübt werden können. Hierdurch wird der Aufbau des gesamten Beschleunigungssensors komplizierter und damit der Herstellungsprozeß aufwendiger und teurer.

Weiterhin ist bei den bekannten einlagigen Beschleunigungssensoren, das heißt ohne obere Gegenelektrode, nachteilig, daß durch das angelegte Potential zur kapazitiven Messung der Auslenkung der seismischen Masse eine elektrostatische Anziehung der seismischen Masse zum Substrat (Basis) erfolgt. Um ein Aufliegen der seismischen Masse auf dem Substrat zu vermeiden, können nur kleine Spannungen zur Kapazitätsmessung angelegt werden. Hierdurch können nur kleine Meßströme mit einem schlechteren Signal/Rauschverhältnis zur Verfügung gestellt werden. Weiterhin ist bereits vorgeschlagen worden, zur Vermeidung des schlechten Signal/Rauschverhältnis zur Verfügung gestellt werden. Weiterhin ist bereits vorgeschlagen worden, zur Vermeidung des schlechten Signal/Rauschverhaltens ein Trägerfrequenzverfahren mit einem hochfrequenten Spannungssignal mit sehr niedriger Spannungsamplitude einzusetzen. Die hohe Frequenz sorgt trotz der niedrigen Spannung für akzeptable, der Kapazität proportionale Signalströme. Zur Erlangung genauer Meßergebnisse ist jedoch auch bei dieser Beschleunigungssensoranordnung die zusätzliche Anordnung einer Gegenelektrode in Form einer Deckelektrode über der beweglichen seismischen Masse notwendig, so daß elektrostatische Kräfte, die von der angelegten Meßspannung ausgehen, in beiden Richtungen auf die seismische Masse wirken und damit sich gegenseitig ausschalten. Dies bedeutet die bereits erwähnte Verkomplizierung des Sensoraufbaus, der somit nur aufwendig und teuer herzustellen ist.

Aus , Proceedings of the Workshop on Micro-electromechanical Systems", Fort Lauderdale, 07.02.-10.02.1993, J. Bernstein et al.,"A Micromachined Comb-Drive Tuning Fork Rate Gyroscope", IEEE, Micro-Electromechanical Systems, Seite 143 bis 148, ist ein Drehratensensor mit durch einen Kammantrieb in ebene Schwingungen versetzbaren Schwingmassen bekannt, welche infolge einer Corioliskraft aus der Schwingungsebene heraus ausgelenkt werden. Weiter ist dort vorgesehen, dass die Schwingmassen über Biegefedern an einer Verankerung aufgehängt sind, und dass Mittel zum Anregen einer ebenen Schwingung und Auswertemittel zum Erfassen einer durch den Coriolis-Effekt hervorgerufenen Bewegung der Schwingmassen und Ermitteln einer Drehrate vorgesehen sind. Daneben ist der dort vorgeschlagene Drehratensensor ein Sensor mit einem einlagigen Aufbau, d. h. er benötigt keine Gegenelektrode.

Aus US 5,359,893 ist ein Drehratensensor bekannt, der eine Elektrodenstruktur in drei verschiedenen Ebenen einsetzt, um auch Drehungen um die z-Achse senkrecht zur Substratebene zu erfassen. Dort ist weiter vorgesehen, die Höhe der Biegefedern bzw. Torsionsfedern größer zu wählen als deren Breite, wobei gleichzeitig die Torsionsfedern so ausgebildet sind, so dass der Rahmen des Drehratensensors eine durch Roationsbewegungen hervorgerufene Vibrationsbewegung in alle Raumrichtungen ausführen kann.

Vorteile der Erfindung

Der erfindungsgemäße Drehratensensor mit den im Anspruch 1 genannten Merkmalen bietet demgegenüber den Vorteil, mittels einer besonders einfachen und damit kostengünstigen einlagigen Beschleunigungssensoranordnung eine auf den Sensor wirkende Coriolisbeschleunigung sicher zu erfassen und somit die Sensorempfindlichkeit wesentlich zu erhöhen. Dadurch, daß die seismischen Massen derart aufgehängt sind, daß eine Auslenkung der seismischen Massen aufgrund von auf diese wirkende Störbeschleunigungen, insbesondere Linearbeschleunigungen, durch ihre Anordnung unterdrückt wird, ist es vorteilhaft möglich, kleine Coriolisbeschleunigungen sehr einfach und genau zu messen, wobei gleichzeitig höhere Störbeschleunigungen, insbesondere störende Linearbeschleunigungen, eliminiert werden.

In bevorzugter Ausgestaltung der Erfindung ist vorgesehen, daß zwei mechanisch miteinander gekoppelte Schwingmassen eine Schwingstruktur bilden, die durch einen elektromagnetischen Antrieb oder elektrostatischen Kammantrieb in gegenphasiger planarer Oszillation betrieben wird und die über Torsionsfedern mit dem Substrat (Basis) verbunden ist. Hierdurch ist es sehr vorteilhaft möglich, die mit entgegengesetzten Vorzeichen einwirkenden Coriolisbeschleunigungen durch die zwei miteinander gekoppelten Schwingmassen sehr genau zu erfassen, während auftretende Störbeschleunigungen bereits vor Ort durch den mechanischen Aufbau unterdrückt werden können.

Durch die zwei miteinander gekoppelten Schwingmassen wird eine Hebelanordnung (zweiarmiger Hebel mit Drehachse durch die Torsionsfedern) geschaffen, bei der über die Torsionsfedern störende Linearbeschleunigungen mechanisch unterdrückt werden, so daß diese nahezu keine Auslenkung der Schwingstruktur bewirken. Dies wird erreicht, da die auf beide Schwingmassen aufgrund der störenden Linearbeschleunigung wirkenden Kräfte identisch wirken und diese sich somit im Gleichgewicht befinden und keine Verdrillung der Torsionsfedern bewirken. Durch die gegenphasige Oszillation wirken Coriolisbeschleunigungen dagegen mit entgegengesetzten Vorzeichen auf die Schwingmassen und bewirken ein Drehmoment. Hierdurch kommt es zu einer Auslenkung der Schwingstruktur um die Torsionsfedern. Der Grad dieser Auslenkung ist mit Auswertemitteln, insbesondere kapazitiven Auswertemitteln, meßbar. Eine weitere Erhöhung der Genauigkeit ist durch eine Lageregelung der Schwingstruktur besonders einfach durch geeignetes Anlegen einer Rückhaltespannung an die unteren Elektroden unter den Schwingmassen möglich. Auf die Anordnung einer oberen Deckelektrode mit ihren erwähnten Nachteilen kann dank der Hebelanordnung verzichtet werden, so daß sich der Aufbau der Beschleunigungssensoren wesentlich vereinfacht.

In weiterer bevorzugter Ausgestaltung der Erfindung ist vorgesehen, daß den Schwingmassen ein gemeinsamer elektrostatischer Kammantrieb zugeordnet ist und wenigstens eine, vorzugsweise jedoch beide Schwingmassen zusätzlich eine weitere Kammstruktur besitzen, die jeweils einen ineinander greifenden feststehenden und einen beweglichen Kamm aufweisen, die der kapazitiven Anzeige einer Schwingbewegung dienen. Hierdurch kann sehr vorteilhaft durch eine symmetrische und/oder asymmetrische Änderung der Kapazitäten der Kammanordnungen auf die Beschleunigungssensoren wirkende Coriolisbeschleunigungen erkannt werden und die elektronischen Signalspannungen in einfacher Weise ausgewertet werden, so daß neben der bereits erfolgten mechanischen Unterdrückung von Störbeschleunigungen, insbesondere störenden Linearbeschleunigungen eine zusätzliche elektrische Unterdrückung bewirkt wird. Insgesamt können durch eine Kombination der mechanischen und elektrischen Unterdrückung der Störbeschleunigungen mit den einfach aufgebauten Beschleunigungssensoren Coriolisbeschleunigung unabhängig voneinander in zwei Drehachsen, nämlich senkrecht zur planaren Schwingungsebene und senkrecht zur Ebene des Substrats (Basis), erfasst werden.

Weitere vorteilhafte Ausgestaltungen der Erfindung ergeben sich aus den übrigen in den Unteransprüchen genannten Merkmalen.

Zeichnung

Die Erfindung wird nachfolgend in Ausführungsbeispielen anhand der zugehörigen Zeichnungen näher erläutert. Es zeigen:

Figur 1     eine Draufsicht auf einen Drehratensensor;

Figur 2     eine Draufsicht auf einen aktivierten Drehratensensor gemäß Figur 1;

Figur 3    eine Draufsicht auf einen Drehratensensor nach einem weiteren Ausführungsbeispiel;

Figur 4    eine Draufsicht auf einen Drehratensensor nach einem weiteren Ausführungsbeispiel;

Figur 5    eine Draufsicht auf einen Drehratensensor nach einem weiteren Ausführungsbeispiel;

Figur 6    eine Draufsicht auf einen Drehratensensor nach einem weiteren Ausführungsbeispiel;

Figur 7    eine Simulation einer drehratenbedingten Auslenkung eines Drehratensensors;

Figur 8    einen Draufsicht auf einen Drehratensensor nach einem weiteren Ausführungsbeispiel und

Figur 9    eine weitere Draufsicht auf einen Drehratensensor mit einer drehratenbedingten Auslenkung.

Beschreibung der Ausführungsbeispiele

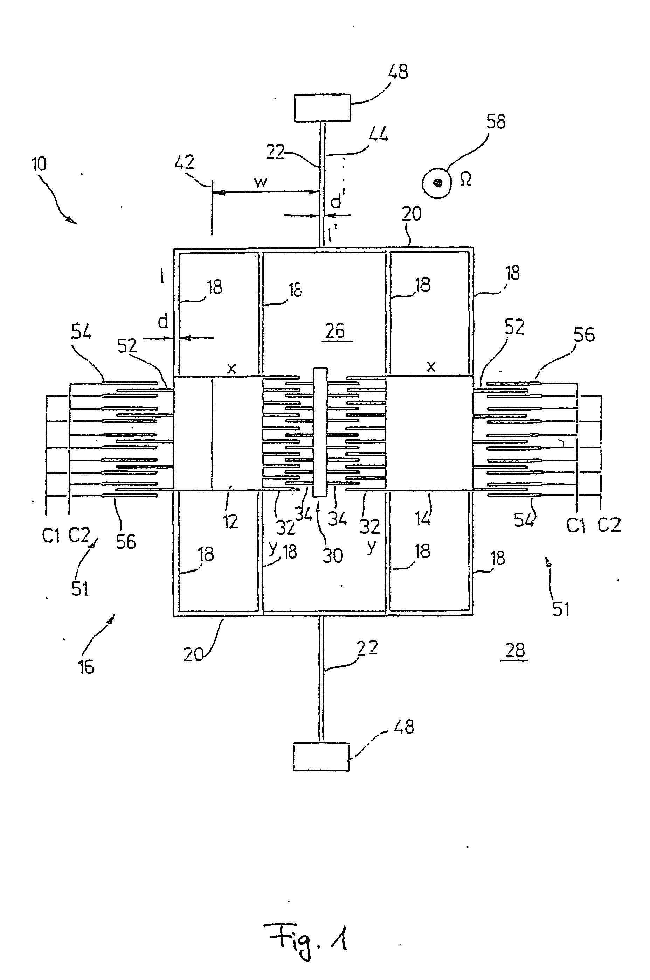

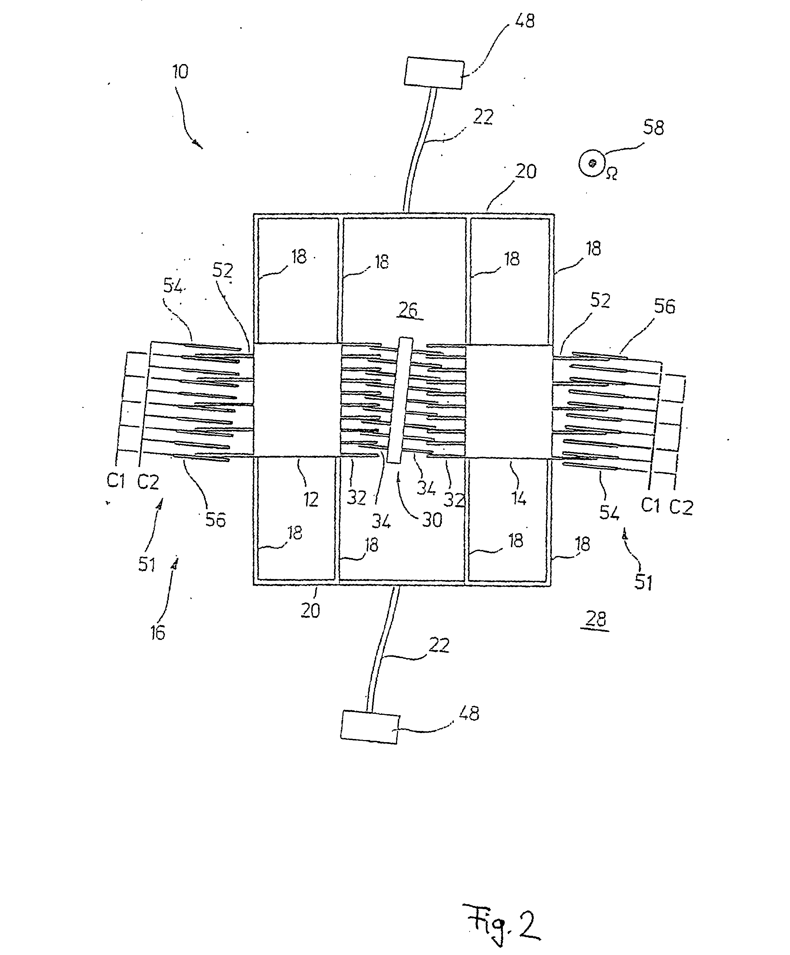

In den Figuren 1 und 2 ist eine bevorzugte Ausgestaltung eines Drehratensensors 10 zur Coriolis-Drehzahlenmessung gezeigt.

Figur 1 zeigt einen allgemein mit 10 bezeichneten Drehzahlensensor. Der Sensor 10 weist zwei Schwingmassen 12 und 14 auf, die mechanisch miteinander gekoppelt sind und eine Schwingstruktur 16 bilden. Die Schwingmassen 12 und 14 weisen an ihren gegenüberliegenden Stirnseiten jeweils zwei symmetrisch angeordnete Biegefedern 18 auf, die eine Länge 1, eine Dicke d sowie eine nicht dargestellte Höhe h aurweisen. Die Biegefedern 18 sind an ihren Enden jeweils mit einem freien Siliziumsteg 20 verbunden. Durch die mit den Biegefedem 18 verbundenen Siliziumstege 20 werden die Schwingmassen 12 und 14 zu der Schwingstruktur 16 mechanisch miteinander gekoppelt. Die Siliziumstege 20 sind über symmetrisch angeordnete Torsionsfedern 22 mit zwei symmetrisch gelegenen äußeren Befestigungsfüßen 48 verbunden. Durch die äußeren Befestigungsfüße 48 ist eine bessere elektrische Kontaktierung der Schwingstruktur 16 möglich. Die Befestigungsfüße sind auf einer Basis 26 (Substrat) angeordnet. Die Torsionsfedern 22 weisen eine Länge 1', eine Dicke d' sowie eine nicht dargestellte Höhe h' auf. Sowohl die Biegefedern 18 als auch die Torsionsfedern 22 weisen ein hohes Aspektverhältnis auf, das heißt, ihre Höhe h bzw. h' ist im Verhältnis zur Dicke d bzw d' möglichst hoch. Die Biegefedern 18 und die Torsionsfedern 22 sind somit in ihrer planaren Schwingungsebene 28 weich und senkrecht zur planaren Schwingungsebene 28, also in Richtung der Siliziumstege 20, steif. Die Schwingmassen 12 und 14, die gleichzeitig als seismische Massen zum Beschleunigungsnachweis dienen, sind somit ebenfalls in der planaren Schwingungsrichtung weich und senkrecht zur planaren Schwingungsebene sehr steif aufgehängt. Die Torsionsfedern 22 sind aufgrund ihres hohen Aspektverhältnisses relativ weich gegenüber einer Torsion um ihre Längsachse, so daß sie in bezug auf die beiden symmetrisch aufgehängten Schwingmassen 12 und 14 wie ein Drehgelenk wirken gegenüber einer Bewegung der beiden Schwingmassen aus der Ebene heraus (Verdrillen der Torsionsfedern).

Nach einem nicht dargestellten Ausführungsbeispiel kann anstatt der beidseitig angeordneten zwei Biegefedern 18 je Schwingmasse 12 oder 14 auf jeder Seite je eine Biegefeder 18 angeordnet sein, die exakt durch den Schwerpunkt der jeweiligen Schwingmassen 12 und 14 (inklusive Kämme) verläuft und mit den Siliciumstegen 20 verbunden ist.

Die Schwingmassen 12, 14 weisen einen elektrostatischen Kammantrieb 30 auf, der aus einem mit den Schwingmassen 12, 14 verbundenen und somit beweglichen Kamm 32 und einen mit dem Kamm 32 in Eingriff stehenden auf der Basis 26 festangeordneten Kamm 34 besteht.

In der Figur 1 ist weiterhin die Länge der Schwingmassen 12 und 14 mit y und die Breite der Schwingmassen 12, 14 mit x bezeichnet. Eine gedachte Schwerpunktachse 42 besitzt zu einer gedachten Mittelachse 44 den Abstand w. Mit dem Zeichen 58 ist die Wirkungsrichtung der Coriolisbeschleunigung und damit der daraus resultierenden Drehrate $\Omega$ angegeben.

Auf den Drehratensensor 10 wirkende Linearbeschleunigungen wirken auf die beiden Schwingmassen 12 und 14 in gleicher Weise und führen damit zu keiner Auslenkung der Schwingmassen 12 und 14, da die maßgeblichen Biegesteifigkeiten der Biegefeder 18 und Torsionsfedern 22 senkrecht zur Basis 26 sehr groß gewählt sind. Eine Torsion der Torsionsfedern 22 stellt sich bei Linearbeschleunigungen aufgrund entgegengesetzt gleicher Drehmomente nicht ein. Eine zwischen der Basis 26 und der Schwingstruktur 16 angelegte Meßspannung bzw. die hieraus resultierende elektrostatischen Feldkräfte führen ebenfalls nicht zu einer Auslenkung der Schwingmassen 12 und 14.

Auftretende drehratenbedingté Coriolisbeschleunigungen wirken senkrecht zur Schwingungsebene 28 mit entgegengesetzten Vorzeichen auf die gegenphasig schwingenden Schwingmassen 12 und 14 ein. Da diese entgegengesetzten Coriolisbeschleunigungen identische Drehmomente an den Torsionsfedern 22 bewirken, werden diese ausgelenkt (verdrillt). Bei einer Torsion der Torsionsfedern 22 vergrößern bzw. verkleinern sich die Abstände der seismischen Schwingmassen 12 und 14 zur Basis 26 mit einer planaren Schwingfrequenz. Diese entstehende Schaukelbewegung kann als mit der planaren Schwingfrequenz auftretende Kapazitätsvariation zwischen den Schwingmassen 12 und 14 und den unter den Schwingmassen 12, 14 befindlichen Elektroden detektiert werden. Zur zusätzlichen Eliminierung von Störbeschleunigungen können die an sich bekannten Verfahren, wie eine Signaldifferenzbildung und eine phasensensitive Synchrondemodulation der gewonnenen Sensorsignale, verwendet werden. Für die gegenphasige planare Schwingfrequenz der beiden Schwingmassen 12 und 14 gilt folgende Beziehung:

$$f_{in'plane} = \frac{1}{\pi}\sqrt{\frac{Ed^3}{pl^3 \, xy}}$$

Für die Frequenz der Torsionsschwingung der beiden Schwingmassen 12 und 14 gilt:

$$f_{Torsion} = \frac{1}{2\pi}\sqrt{\frac{G \cdot K}{l'\left(w^2 + \frac{x^2}{12}\right)m}} \approx \frac{1}{2\pi}\sqrt{\frac{G \cdot d'^3\left(\frac{1}{3} - 0.21\frac{d'}{h}\left(1 - \frac{d'^4}{12h^4}\right)\right)}{l'\left(w^2 + \frac{x^2}{12}\right)pxy}}$$

$$\text{mit } G = \frac{E}{2(1+v)}$$

wobei E das Elastizitätsmodul, v die Poisson-Zahl und h die Schichtdicke der Schwingmassen 12 und 14 bedeutet. Die reine Biegesteifigkeit der vier Biegefedern 18 jeder Schwingmasse 12 und 14 "out-of-plane" ist:

$$D_{Biege} = 4\frac{Edh^3}{l^3}$$

Die Steifigkeit der Schwingstruktur 16 der beiden Schwingmassen 12 und 14 gegenüber Torsion um die zentralen Torsionsfedern 22 ist:

$$D_{Toraon} = \frac{K \cdot G}{W^2 l'}$$

Das Verhältnis der Steifigkeit der Sehwingstruktur 16 gegenuber einer gleichphasigen, das heißt parallelen Auslenkung der beiden Schwingmassen 12 und 14, das heißt einer Biegung der vier Biegefedern aus der Schwingebene 28 heraus, gegenüber einer gegenphasigen, das heißt antiparallelen Auslenkung der beiden Schwingmassen 12 und 14, das heißt einer Torsion der zentralen Torsionsfedern 22 erzeugt:

$$\frac{D_{Biege}}{D_{Torsion}} = \frac{4\frac{Edh^3}{l^3}}{\frac{KG}{W^2 l'}} \approx 24\frac{h^2 \, w^2 \, dl'}{d'^3 \, l^3}$$

Für angenommene Werte von d=1,5μ, 1=400μ, x=500μ, y=1000μ ergibt sich eine gegenphasige planare Schwingfrequenz von $f_{in \, plane}$=890 Hz.

Für d'=3μ, l'=100μ, w=350μ, h=6μ beträgt die Frequenz der Torsionsschwingung $f_{Torsion}$=940 Hz und das Verhältnis von $D_{Biege}/D_{Torsion}$=10.

Für einen Wert h=17μ beträgt $f_{Torsion}$=1080 Hz und das Verhältnis von $D_{Biege}/D_{Torsion}$=75.

Es ist vorteilhaft, den Drehratensensor 10 in einem einlagigen Aufbau, der beispielsweise mittels Verfahren der Oberflächenmikromechanik auf Siliziumsubstraten hergestellt werden kann, in relativ dickem einkristallinen Siliciummaterial, zum Beispiel Silicon-on-Insulator (SOI) mit geeigneter Dotierung oder in relativ dickem Polysilicium herzustellen, weil durch die große Schichtdicke Querempfindlichkeiten besonders wirksam unterdrückt werden können. Die Schwingstruktur 16 gewinnt durch das dicke Siliciummaterial an mechanischer Stabilität und ist relativ unempfindlich gegenüber dotierungsbedingten Spannungen und kann eine besonders ebene planare Schwingungsbewegung ausführen. Weiterhin können die Kapazitäten der Kammstrukturen 30 zur Aufnahme der planaren Schwingungsbewegung groß, also leicht auswertbar hergestellt werden. Weiterhin können sehr vorteilhaft unter den Schwingmassen 12 und 14 im Substrat 26 höherdotierte Bereiche mit von der Substratdotierung verschiedenem Dotierungstyp oder Polysiliciumelektrodenbereiche mit Zwischenoxid vorgesehen sein, um eine gegenseitige Isolation und gute elektrische Kontaktierung der unteren Kondensatorflächen, also der unteren Elektroden, zu ermöglichen. Die Kontaktierung dieser Flächen erfolgt vorteilhaft von oben, beispielsweise über Trenchlöcher, die nach Oxidation der Wände mit hochleitfähigem Polysilicium oder Metall planarisiert werden.

Die untere Elektrode kann aus einer dünnen Schicht Polysilicium bestehen, die über ein Zwischenoxid auf dem Substrat 26 angeordnet ist. Es ergibt sich somit ein Schichtenaufbau (Sandwich) aus dem Substrat 26, dem Zwischen-(Isolier-)oxid, dem leitenden Polysilicium der unteren Elektrode, einer relativ dicken Opferoxidschicht, die später entfernt wird, und dem dicken Sensorsilicium bzw. Sensorpolysilicium (Schwingmassen 12, 14). Der Drehratensensor 10 kann somit mit gebräuchlichen, in der Halbleitertechnik bekannten Verfahren mit geringen Modifikationen einfach aufgebaut werden.

Insgesamt ist ein Drehratensensor 10 geschaffen, der eine obere Deckelektrode oder eine Lageregelung durch elektronische Gegenkopplung nicht mehr benötigt und daher einfach und kostengünstig herzustellen ist. Eine Lageregelung zur weiteren Verbesserung der Sensoreigenschaften kann verhältnismäßig einfach mit integriert werden. Eine Lageregelung hat zusätzlich folgende Vorteile; Erhöhung der dynamischen Sensorresonanzfrequenz in Detektionsrichtung und damit verbesserte zeitliche Dynamik; eine kleinere Dämpfung und damit höhere Güte des Beschleunigungsaufnehmers, damit breiteren und flacheren Frequenzverlauf; verbesserte Linearität und Genauigkeit sowie Dynamik des Meßbereichs. Zur Aufnahme der Kapazitäten bzw. der aus der Coriolisbeschleunigung resultierenden Kapazitätsänderungen kann eine relativ hohe Meßspannung mit einem entsprechend guten Signal-Rauschverhältnis zwischen den Schwingmassen 12, 14 und dem Substrat 26 angelegt werden, ohne daß eine elektrostatische Anziehung der Schwingmassen 12 und 14 erfolgt. Durch den gewählten mechanischen Aufbau des Drehratensensors 10 führen Linearbeschleunigungen, die beiden Schwingmassen 12 und 14 gemeinsam sind, zu nahezu keiner Auslenkung der Schwingstruktur 16, so daß auch keine nennenswerte Arbeitspunktverlagerung eintritt.

Nach einem nicht ausgeführten Ausführungsbeispiel kann es von Vorteil sein, den mikromechanischen Aufbau des Drehratensensors 10 mit einer integrierten Auswerteelektronik zu kombinieren, wobei die Herstellung der mikromechanischen Strukturen und das anschließende Freiätzen des Drehratensensors 10, das heißt das Entfernen der bei der Herstellung der freibeweglichen Schwingungsstruktur 16 notwendigen Opferschicht, am Ende des Herstellungsprozesses der integrierten Schaltung stattfinden kann. Zur Herstellung der mikromechanischen Strukturen wird vorteilhaft ein Plasmaätzverfahren eingesetzt mit hoher Anisotropie und Selektivität gegenüber gewöhnlichen Photoresistmasken, was die Einbindung in den IC-Prozeß wesentlich vereinfacht (back-end-Prozessierung des mikromechanischen Teils).

Der elektrostatische Kammantrieb 30 ist in Figur 1 oder 2 zentral angeordnet und besitzt beidseitig einen feststehenden Kamm 34, der jeweils mit einem mit den Schwingmassen 12 und 14 verbundenen und damit beweglichen Kamm 32 in Eingriff steht. Die Schwingmassen 12 und 14 weisen an ihrer äußeren Seite jeweils eine Kammstruktur 51 mit einem Kamm 52 auf, die zwischen feststehenden Kämmen 54, die eine Kapazität C2 bilden und feststehenden Kämmen 56, die eine Kapazität C1 bilden, eingreifen.

Die in den Figuren 1 und 2 gezeigte Anordnung übt folgende Funktion aus:

Aus den Momentangeschwindigkeiten v und -v der in der Schwingungsebene 28 gegenphasig oszillierenden Schwingmassen 12 und 14 und einer Drehrate $\Omega$, in den Figuren 1 und 2 mit 58 bezeichnet, senkrecht zur Schwingungsebene 28 resultieren Coriolisbeschleunigungen $a_c=\Omega v$ bzw. $-\Omega v$ auf die Schwingmassen 12 und 14. Diese Coriolisbeschleunigungen bewirken auf die gesamte Schwingstruktur 16 ein Drehmoment:

$$M=2m a_c w = 2m\Omega vw.$$

Infolgedessen wird die Schwingstruktur 16 gegen die Steifigkeit der Torsionsfedern 22 gedreht, sodaß sich eine ebene Drehschwingung mit der Frequenz der ebenen Linear-Oszillation der Schwingmassen 12 und 14 einstellt.

Die Amplitude dieser Drehschwingung ist proportional der zu messenden Drehrate $\Omega$. Da auftretende Linearbeschleunigungen wiederum auf beide Schwingmassen 12 und 14 zu jedem Zeitpunkt in gleicher Weise wirken, folgt hierdurch keine Auslenkung der Schwingmassen 12 und 14 und es ergibt sich kein resultierendes planares Drehmoment und somit auch keine planare Drehbewegung.

Der resonante Antrieb der Schwingmassen 12 und 14 zu gegenphasiger Oszillation erfolgt elektromagnetisch oder elektrostatisch über den Kammantrieb 30 mit Hilfe einer nicht dargestellten Oszillatorschaltung, die die Energieverluste der Schwingmassen periodisch ersetzt. Die dargestellten Kammstrukturen 51 der Kämme 52, 54 bzw. 56 dienen der kapazitiven Erkennung der Schwingungsbewegung der Schwingungsstruktur 16. Zur Verdeutlichung ist in der Figur 1 der Drehratensensor 10 in Ruhestellung und in Figur 2 der Drehratensensor 10 in einer ausgelenkten Stellung dargestellt. Die äußeren Kammstrukturen 51 der Kämme 52, 54 bzw. 56 dienen einerseits der Erkennung der linearen Oszillationsbewegung und andererseits der planaren Drehschwingungsbewegung der Schwingungsstruktur 16.

Eine lineare Schwingungsbewegung verändert die Kapazitäten C1 und C2 zwischen den bewegten Kämmen 52 und den feststehenden Kämmen 54 bzw. 56 auf beiden Seiten eines jeden beweglichen Kammelements des Kamms 52 in gleicher Weise. Indem die beweglichen Kämme 52 mehr oder weniger tief in den Spalt zwischen den feststehenden Kämmen 54 bzw. 56 eintauchen, wird die Kapazität symmetrisch erhöht bzw. erniedrigt. Aus der sich ergebenden Kapazitätsvariation von C1 und C2 kann eine elektrische Signalgröße abgeleitet werden, die entsprechend im Gleichtakt variiert und die der Schwingungsamplitude proportional ist.

Eine senkrecht auf die Basis 26 zu messende Richtung der Drehrate $\Omega$ führt hingegen zu einer drehratenbedingten Torsionsbewegung der gesamten Schwingungsstruktur 16 und führt zu einer gegensinnigen Beeinflussung der Kapazitäten C1 und C2. Dies erfolgt, indem die Position der beweglichen Kämme 52 zwischen den feststehenden Kämmen 54 bzw. 56 asymmetrisch wird (Figur 2). Entsprechend zeigen die aus der Kapazitätsvariation der Kapazitäten C1 und C2 abgeleiteten elektrischen Signalgrößen einen zueinander inversen Verlauf an, das heißt, die Spannungen variieren im Gegentakt.

Eine Summation der den Kapazitäten C1 und C2 entsprechenden elektrischen Signalspannungen bzw. Signalströmen U1 und U2, I1 und I2, gibt somit die lineare Schwingungsbewegung der Schwingungsstruktur 16 wieder. Eine entsprechende Subtraktion der elektrischen Signalspannungen bzw. Signalströme gibt die Drehschwingungsbewegung der Schwingungsstruktur 16 wieder, die ein Maß für die Drehrate $\Omega$ senkrecht zur Ebene ist. Diese Summation bzw. Subtraktion der Signalspannungen bzw. Signalströme können gleichzeitig an ein und derselben äußeren Kammstruktur 51 der Kämme 52, 54 bzw. 56 gebildet werden. Es ist jedoch auch möglich, die einer Schwingmasse, beispielsweise der Schwingmasse 12 zugeordnete Kammstruktur 51 Kämme 22, 54 bzw. 26 zur Erzeugung der Summation der Signalspannungen bzw. Signalströme und die andere, im Beispiel der Schwingmasse 14 zugeordnete Kammstruktur 51 der Kämme 52, 54 und 56 zur Erzeugung der Subtraktion der Signalspannungen oder Signalströme zu verwenden. Weiterhin ist denkbar, nur einen Teil der äußeren Kammstruktur 51 jeder Schwingmasse 12 und 14 zur Summation der Signalspannungen oder Signalströme und den anderen Teil zur Substraktion zu verwenden. Als besonders günstig erweist es sich, eine Auswertung beider äußerer Kammstrukturen 51 zur Bildung einer Subtraktion der Signalspannungen U1-U2 bzw. Signalströme I1-I2, und eine Addition der Signalspannungen U1+U2, bzw. der Signalströme I1+I2, zu verwenden, da hiermit eine zusätzliche elekttische Unterdrückung von Linearbeschleunigungen senkrecht zur planaren Schwingungsrichtung in der Ebene gegeben ist. Die Linearbeschleunigungen in dieser Richtung wirken gegen die Zug-/Drucksteifigkeit der äußeren Biegefedern 18 und können eine minimale Assymmetrie der Kondensatoren C1 und C2 bedingen. Diese Asymmetrie ist jedoch so beschaffen, daß entsprechende Kapazitäten der einen Seite jeweils gerade entgegengesetzt reagieren wie die der anderen Seite. So können beispielsweise durch Parallelschaltung von Kapazitäten C1 der einen und der anderen Seite bzw. von Kapazitäten C2 der anderen und der einen Seite Summenkapazitäten C1' und C2' erhalten werden, die in erster Ordnung unabhängig durch die von den Linearbeschleunigungen bedingten Asymmetrien sind. Die drehratenbedingte Torsionsbewegung der Schwingungsstruktur 16 beeinflussen die Kapazitäten C1 und C2 auf beiden Seiten jeweils identisch, so daß der drehratenbedingte Nachweis der Drehbewegung von der angegebenen Verschaltung der Kapazitäten C1 und C2 unberührt bleibt.

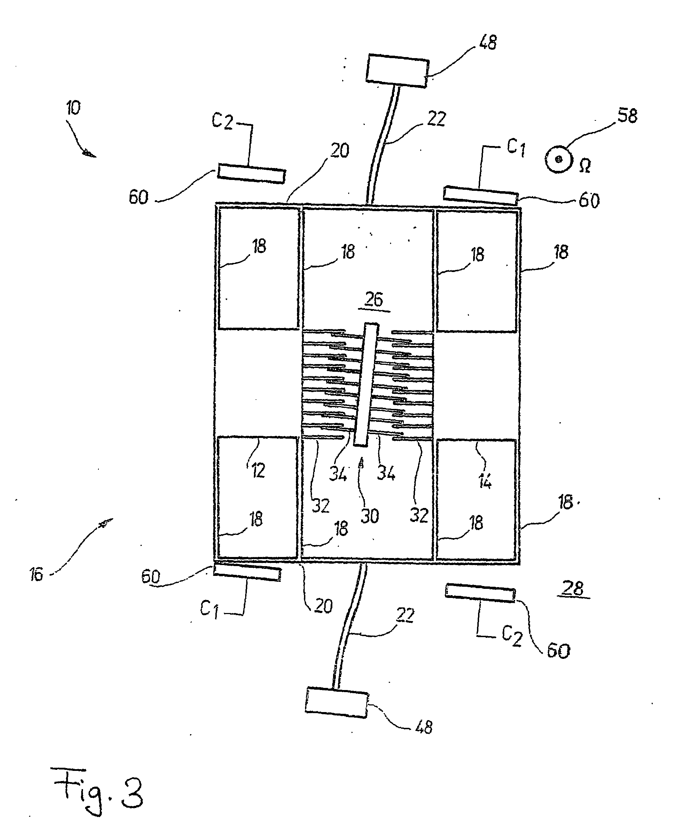

In der Figur 3 ist eine weitere Möglichkeit der Messung der drehratenbedingten Torsionsbewegung der Schwingungsstruktur 16 gezeigt. Gleiche Teile wie in den Figuren 1 und 2 sind mit gleichen Bezugszeichen versehen und nicht nochmals erläutert. Hier sind als Gaps 60 ausgebildete Kapazitäten C1 und C2 auf dem Substrat (Basis) 26 angeordnet. Durch diese Anordnung wird erreicht, daß eine lineare Schwingungsbewegung der Schwingungsstruktur 16 die Kapazitäten C1 und C2 nicht beeinflußt, da eine relative Abstandsänderung zwischen der Schwingungsstruktur 16 und den Kapazitäten C1 und C2 durch die lineare Schwingungsbewegung nicht erfolgt. Eine drehratenbedingte Torsionsbewegung - in plane Torsion - der Schwingungsstruktur 16 hingegen führt zu dem in Figur 3 dargestellten Zustand der Schwingungsstruktur 16, das heißt, diese wird um die Torsionsfedern 22 gedreht. Hierdurch kommt es zu einer Abstandsänderung zwischen der Schwingungsstruktur 16 und den auf der Basis 26 angeordneten Gaps 60. Bei der gezeigten Darstellung erfolgt eine Annäherung an die Kapazitäten C1 und eine Entfernung von den Kapazitäten C2. Aus diesen sich ergebenden Kapazitätsvariationen kann wiederum eine elektrische Signalgröße abgeleitet werden, die entsprechend der drehratenbedingten Torsionsbewegung im Takt variiert und die der Schwingungsamplitude der Schwingstruktur 16 proportional ist. Somit kann analog der bereits zu den Figuren 1 und 2 erläuterten Auswertung der elektrischen Signalspannungen beziehungsweise Signalströme eine Auswertung beziehungsweise Erfassung der drehratenbedingten Torsionsbewegung erfolgen. Mit der Anordnung der Gaps 60 wird der Aufbau des gesamten Drehratensensors 10 vereinfacht, der somit kostengünstiger herstellbar ist. Außerdem werden Störungen der Detektion durch die Schwingungsbewegung selbst ausgeschlossen.

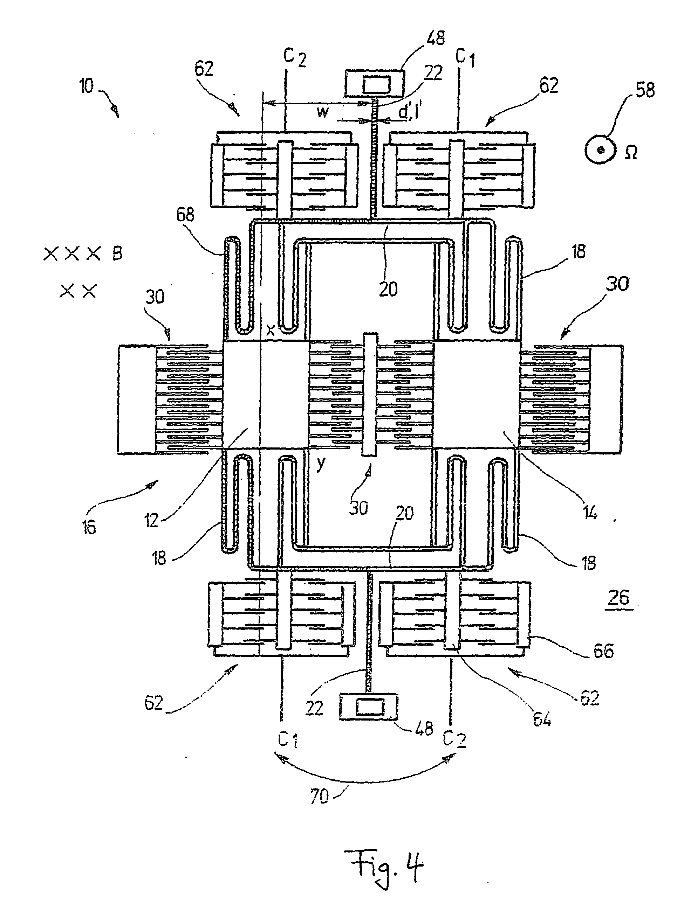

In den Figuren 4 bis 6 sind weitere Ausführungsvarianten eines Drehratensensors 10 dargestellt, wobei hier insbesondere vorteilhafte Ausführungen zu dem in Figur 3 dargestellten Drehratensensor 10 gezeigt sind. Die in der Figur 3 mit 60 bezeichneten Gaps sind hier durch jeweils eine Kammstruktur 62 gebildet. Die Kammstrukturen 62 bestehen aus einem starr mit dem Steg 20 verbundenen Kamm 64 und einem auf dem Substrat 26 angeordneten Kamm 66. Die Kämme 64 und 66 greifen hierbei, wie dargestellt, ineinander.

Die starr miteinander gekoppelten Schwingmassen 12 und 14 können - wie bereits erwähnt - elektrostatisch durch die Kammstrukturen 30 zu einer gegenphasigen Schwingungsbewegung angeregt werden. Eine weitere Möglichkeit der Anregung zu der gegenphasigen Schwingungsbewegung besteht darin, den hier mit einer Punktlinie 68 bezeichneten Bereich des Sensorelementes 10 als stromdurchflossene Leiterschleife zu schalten, die einem hier mit B angedeuteten Magnetfeld ausgesetzt ist. Hierdurch kommt es zu einem an sich bekannten Lorentzkraft-Antrieb. Für den Fall, daß die Schwingungsbewegung mittels des Lorentzkraft-Antriebes erzeugt wird, können die Kammstrukturen 30 entfallen.

Ein Abgriff der Schwingungsbewegung erfolgt kapazitiv über die Kammstrukturen 62. Durch die planare, gegenphasige Schwingung der Schwingstruktur 16 erfolgt eine Kapazitätsvariation zwischen den Kämmen 64 und 66 der Kammstrukturen 62. Die sich durch die ändernden Kapazitäten ergebenden Spannungsänderungen werden als Eingangsgröße einer nicht dargestellten elektronischen Rückkopplungsschaltung zugeführt, die beispielsweise als Vierpoloszillator mit der Möglichkeit einer Schwingungsamplitudenstabilisierung ausgebildet sein kann. Tritt die Drehrate 58 senkrecht zur Ebene des Substrats 26 auf, führt diese zu entgegengesetzt gleichen Coriolisbeschleunigungen $a_C - \Omega \cdot v$ in der Waferebene senkrecht zur Schwingungsbewegung der Schwingstruktur 16. Die Coriolisbeschleunigungen bringen aufgrund ihres Vorzeichenverhaltens ein ebenes Drehmoment in die Schwingstruktur 16 ein. Hieraus resultiert eine mit dem Doppelpfeil 70 bezeichnete ebene Torsion - in-plane-Torsion - der Schwingstruktur 16.

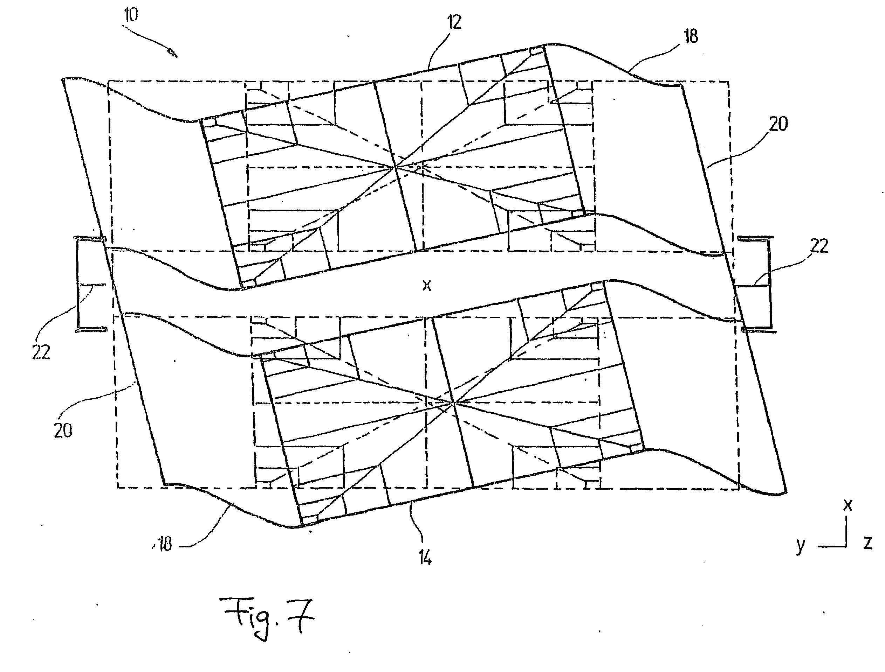

In der Figur 7 ist die Torsion 70 in einem Simulationsdiagramm dargestellt. Die tatsächlich auftretenden Torsionswinkel sind sehr gering, so daß in der Figur 7 zum Zwecke der Verdeutlichung die Torsion 70 extrem übersteigert dargestellt ist.

Die Detektion der Coriolisbeschleunigungen beziehungsweise der daraus resultierenden Torsionswinkel erfolgt mittels der Kammstrukturen 62. Durch die getrennte Anordnung der Kammstrukturen 62 von den Kammstrukturen 30 wird eine Detektion der Torsionswinkel von der ebenen Schwingungsbewegung der Schwingstruktur 16 weitgehend entkoppelt. Es erfolgt ausschließlich eine Detektion einer Verdrehung der Schwingstruktur 16, jedoch nicht eine lineare Verrückung der Schwingstruktur 16. In dem in Figur 4 dargestellten Ausführungsbeispiel ist die Entkopplung der Schwingungsbewegung von der Torsionsbewegung vollständig realisiert. Bei einer linearen gegenphasigen Schwingung der Schwingstruktur 16 bleiben die Stege 20 vollständig in Ruhe. Auf das Sensorelement 10 einwirkende Linearbeschleunigungen, die beispielsweise in Kraftfahrzeugen vorhanden sind, führen zu einer nur sehr kleinen linearen Verrückung der Stege 20 senkrecht zur Detektionsrichtung für den Torsionswinkel. Diese Verrückung hat jedoch aufgrund der Ausführung der Kanunstrukturen 62 kein elektrisches Signal zur Folge. Die Kämme 64 entfernen sich beispielsweise aus dem linken Teil der fest auf dem Substrat 26 angeordneten Kämme 66 um denselben Wert, wie diese in den rechten Teil der Kämme 66 zusätzlich eintauchen. Hierdurch bleibt bei einer linearen Auslenkung die Gesamtkapazität konstant. Die Steifigkeit der Anordnung der Schwingstruktur 16 gegenüber diesen störenden Linearbeschleunigungen ist darüber hinaus wesentlich höher als gegenüber Coriolisbeschleunigungen, da diese an einem Hebelarm angreifen und dadurch ein großes Moment bewirken. Die Coriolisbeschleunigungen können somit im Gegensatz zu den Linearbeschleunigungen die Schwingstruktur 16 auslenken. Die Torsionsfedern 22 erfahren bei der Drehmomentbeanspruchung eine parabelförmige Auslenkung, so daß im Gegensatz zu der bei einer Linearbeschleunigung auftretenden S-förmigen Biegelinie ein vierfach höherer Steifigkeitsfaktor gegeben ist.

Durch die Ausgestaltung der Biegefedern 18 wird die Schwingungsbewegung der Schwingstruktur 16 linearisiert, da die Biegefedern 18 aufgrund ihres Designs auch bei großen Auslenkungen ein lineares Kraft-/Weggesetz aufweisen. Der sogenannte Hooke'sche Bereich der Biegefedern 18 ist durch das Design erheblich erweitert. Durch die starre Kopplung der Schwingmassen 12 und 14 über die Stege 20 ist für den Antrieb der linearen Schwingungsbewegung auch lediglich die Anordnung einer Kammstruktur 30 ausreichend.

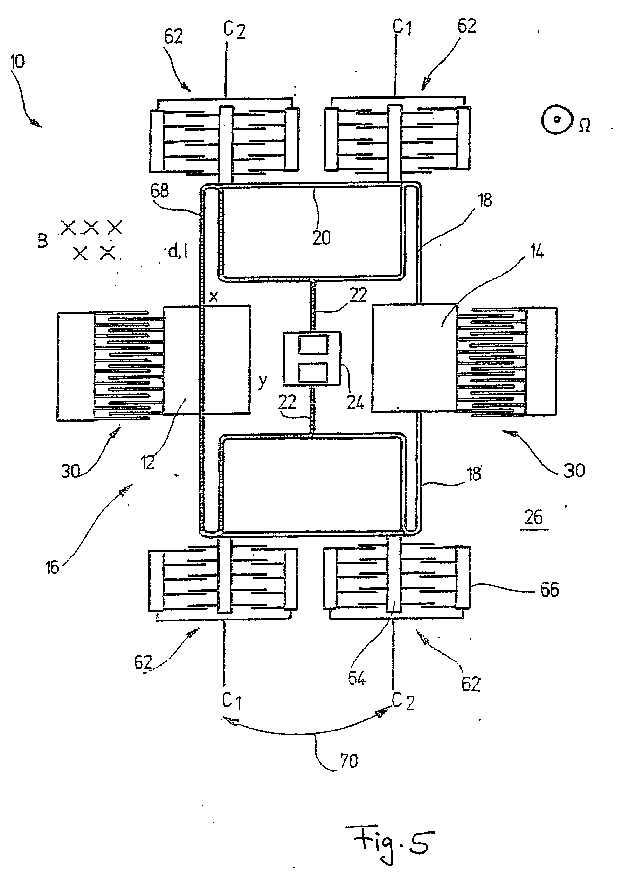

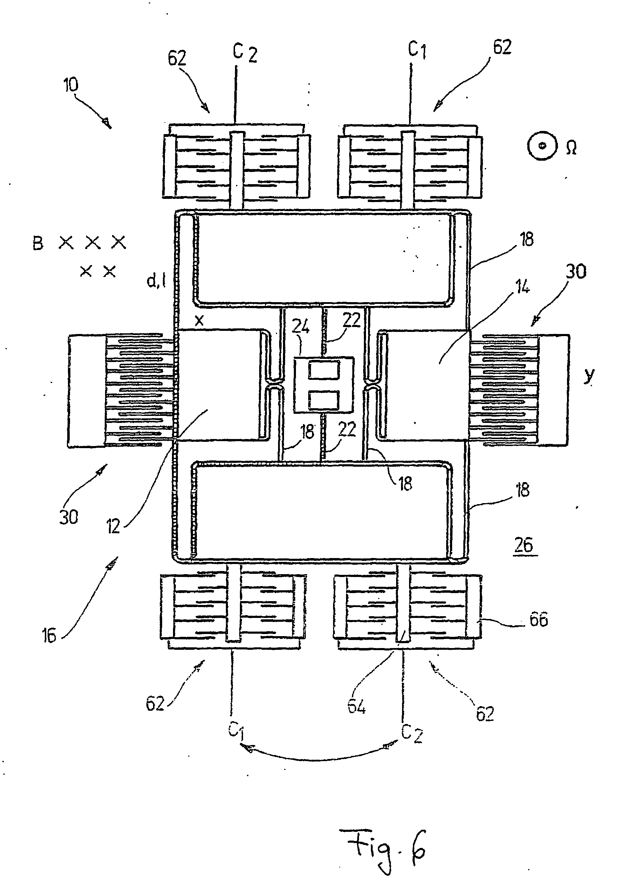

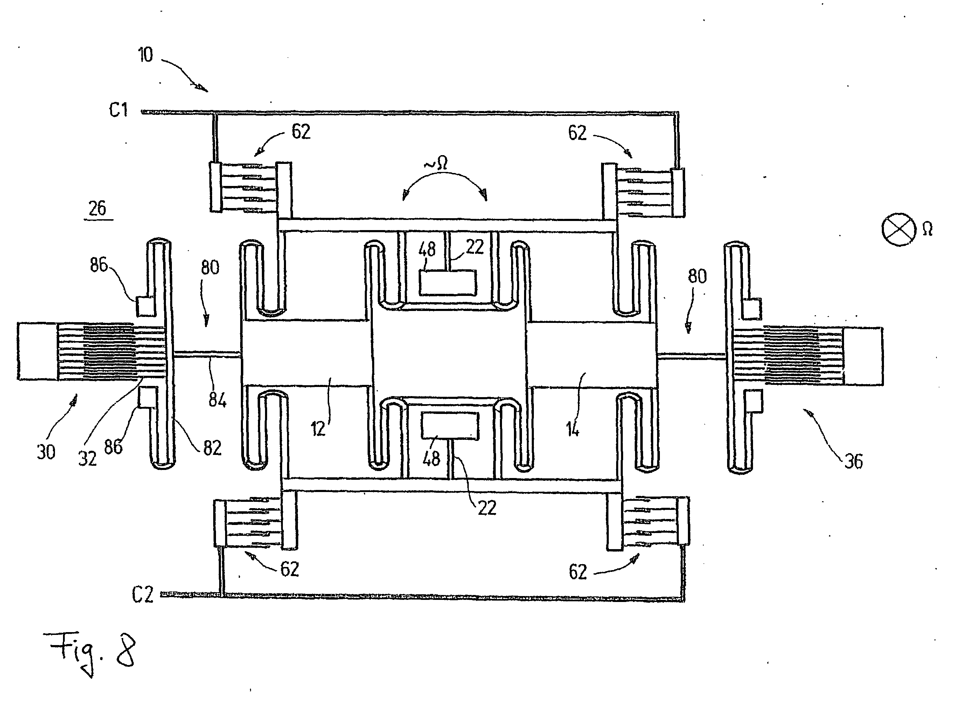

Bei den in den Figuren 5 und 6 dargestellten Ausführungsbeispielen ist ein anderes Design für die Biegefedern 18 gewählt und die Ankopplung des Drehratensensors 10 auf dem Substrat 26 über einen zentralen Fuß 24 realisiert. Der übrige Aufbau entspricht dem in Figur 8 gezeigten. Durch die Gestaltung der Biegefedern 18 wird die Entkopplung der linearen Schwingungsbewegung von der Torsionsbewegung 70 beeinflußt. Hier tritt ein Quadraturterm der doppelten Schwingfrequenz der linearen Schwingungsbewegung zu der Auslenkung der Schwingstruktur 16 in der mit 70 bezeichneten Torsionsbewegung hinzu. Bei einer Schwingungsamplitude von 10 µm der Schwingstruktur 18 bei der linearen Schwingungsbewegung erfolgt eine Auslenkung in Detektionsrichtung von ca. 0,1 µm. Die Aufhängung der Schwingungsmassen 12 und 14 erfolgt bei dem in Figur 5 dargestellten Ausführungsbeispiel über jeweils eine auf beiden Seiten angeordnete Biegefeder 18. Hierdurch kommt es zu einem zusätzlichen Torsionsfreiheitsgrad der Schwingmassen 12 beziehungsweise 14. Bei dem in Figur 6 dargestellten Ausführungsbeispiel ist dieser zusätzliche Torsionsfreiheitsgrad durch jeweils ein weiteres, innen angeordnetes Federpaar von Biegefedern 18 gesperrt. Bei beiden Ausführungsbeispielen ist die Torsionsfeder 22 geteilt, das heißt, diese läuft in zwei Armen aus, die mit den Stegen 20 verbunden sind. Hierdurch ist eine zusätzliche Streßrelaxation bei der Aufhängung der Schwingstruktur 16 gegeben.

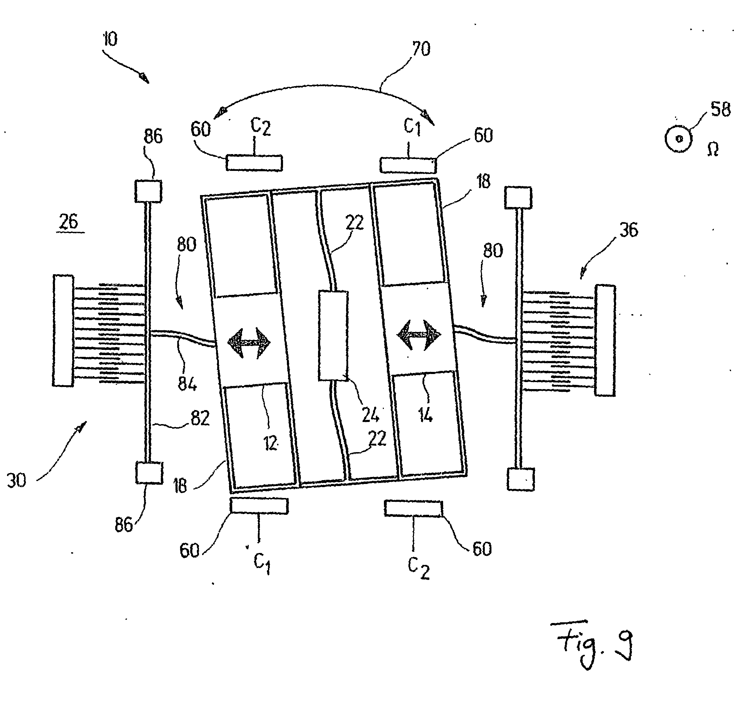

In den Figuren 8 und 9 sind weitere Ausführungsbeispiele von Drehratensensoren 10 gezeigt. Gleiche Teile wie in den vorhergehenden Figuren sind wiederum mit gleichen Bezugszeichen versehen und hier nicht nochmals detailliert erläutert. Mittels der Figuren 8 und 9 soll eine vorteilhafte Entkopplung der in den vorhergehenden Figuren mit 30 beziehungsweise 36 bezeichneten Kammstrukturen verdeutlicht werden. Die Kammstrukturen 30 dienen als elektrostatischer Schwingungsantrieb für die Schwingstruktur 16, während die Kammstruktur 36 als Schwingungsabgriff ausgebildet ist. Die Verbindung der Kammstruktur 30 beziehungsweise der Kammstruktur 36 mit den Schwingmassen 12 und 14 der Schwingstruktur 16 erfolgt über eine Entkopplungsstruktur 80. Die Entkopplungsstruktur 80 besteht aus einem Hauptsteg 82, der parallel zu den Torsionsfedern 22 angeordnet ist. Der Hauptsteg 82 ist über einen zu diesem senkrecht verlaufenden Steg 84 mit den Schwingmassen 12 beziehungsweise 14 verbunden. Der Steg 82 ist über Befestigungsfüße 86 auf dem Substrat 26 befestigt. An den den Schwingmassen 12 beziehungsweise 14 abgewandten Seiten des Steges 82 ist jeweils der der Schwingstruktur 16 zugeordnete, und damit beweglichen Kamm 32 der Kammstruktur 30 angeordnet. Durch die Entkopplungsstruktur 80 wird sehr vorteilhaft erreicht, daß eine von den Kammstrukturen 30 beziehungsweise 36 ausgehende elektrostatische Instabilität von der Schwingungsbewegung der Schwingstruktur 16 entkoppelbar ist. Der Eingriff des elektrostatischen Antriebs in den Detektionsmode (ebene Drehung der Schwingstruktur 16) wird durch diese Entkopplung minimiert, so daß die Detektion nicht durch den elektrostatischen Antrieb beeinflußt wird oder die gewonnenen Signale verfälscht werden.

Nach weiteren, nicht dargestellten Ausführungsbeispielen kann die Anordnung der Kammstrukturen 62 und der Elektroden 74 beziehungsweise 76 an einer Schwingstruktur 16 miteinander kombiniert werden. So sind Drehratensensoren 10 geschaffen, die gleichzeitig eine aufgrund von Coriolisbeschleunigungen drehratenbedingte Auslenkung der Schwingstruktur 16 sowohl "in-plane" als auch "out-of-plane" detektiert werden können. Insgesamt ist somit ein einfach aufgebauter Drehratensensor 10 geschaffen, der mittels einer einlagigen Oberflächenmikromechanik-Technik, beispielsweise Silicon-on-Insulator (SOI) oder dicken polykristallinen Silicium durch eine Kombination von anisotropen Plasmaätzen und isotropen Opferschichtätzen gefertigt werden kann.

Nach einem nicht dargestellten Ausführungsbeispiel ist es von zusätzlichem Vorteil, mittels einerelektronischen Lageregelung den aus der Coriolisbeschleunigung resultierenden Drehmomenten mit elektrostatisch induzierten Rückhaltemomenten entgegenzuwirken. Hierdurch bleibt die Schwingungsstruktur 16 bezüglich ihres Torsionsfreiheitsgrades nahezu unausgelenkt. Die zu jedem Zeitpunkt erforderliche Rückhaltespannung ist dann ein direktes Maß für die einwirkende Coriolisbeschleunigung. Hier ist eine Vielzahl von Kombinationen möglich, die die Auswahl einzelner Kämme fiir die Gewinnung der Lageinformationen und einzelner Kämme für die elektrostatische Rückhaltung betreffen. Sehr vorteilhaft ist, ein und dieselbe Kammstruktur 51 gleichzeitig sowohl für die Gewinnung der Lageinformation als auch für die Erzeugung der Rückhaltemomente einzusetzen. So kann beispielsweise ein allgemein bekanntes Trägerfrequenzverfahren eingesetzt werden.

Nach einem ebenfalls nicht dargestellten Ausführungsbeispiel können die in den Figuren 1, 2 und 3 gezeigten Drehratensensoren mit Zugfedern kombiniert werden. Es erfolgt eine Linearisierung dergegenphasigen ebenen Schwingungsbewegung der beiden Schwingmassen 12 und 14. Dies sorgt auch bei großen Schwingamplituden für eine verbesserte Linearität der Auslenkung und ein Entkoppeln der Eigenfrequenz- und Schwingungsamplitude. Um einer Verminderung der mechanischen Unterdrückung von Störbeschleunigungen in der Ebene in Richtung der Torsionsfedern 22 entgegenzuwirken, ist es vorteilhaft, die zusätzliche elektrische Unterdrückung von Linearbeschleunigungen durch Auswertung beider äußeren Kammstrukturen für Subtraktion der Signalspannungen U1-U2, bzw. der Signalströme I1-I2, kombiniert mit einer Lageregelung durchzuführen.

Nach einem weiteren nicht dargestellten Ausführungsbeispiel kann eine Kombination eines Drehratensensors gemäß der Figuren 1 und 3 mit einem Drehratensensor mit einer "out-of-plane"-Torsionsschwingung, erfolgen. Hierdurch wird es möglich, unabhängig voneinander zwei Drehachsen, das heißt eine Drehrate $\Omega_1$ senkrecht zur Schwingungsrichtung in der Schwingungsebene 28 und eine Drehrate $\Omega_2$ senkrecht zur Basis 26 (Substrat 26) durch einen einzigen Drehratensensor zu erfassen. Eine Verdrillung der Torsionsfedern 22, das heißt eine Torsion der Schwingmassen 12 und 14 aus der Schwingebene 28 heraus, erkennt mittels unter den Schwingmassen 12 und 14 angeordneten Elektroden die Drehrate $\Omega_1$ senkrecht zur Schwingungsebene 28, während eine Torsion der Schwingungsstruktur 16 in der Schwingungsebene 28 durch Verbiegen der Torsionsfedern 22 mittels lateraler Kammstrukturen 51 die Drehrate $\Omega_2$ senkrecht zur Basis 26 ermittelt. Man erhält somit einen besonders einfachen, kostengünstigen Drehratensensor für zwei Achsen.

**Patentansprüche**

1. Drehratensensor mit einer Schwingungsstruktur mit zwei federnd an einem Substrat (Basis) aufgehängten Stegen (20), an denen federnd zwei, aufgrund einer Beschleunigungseinwirkung auslenkbare Schwingmassen (12, 14) aufgehängt sind, wobei die Aufhängung der Schwingmassen (12, 14) an den Stegen (20) jeweils beidseitig über Biegefedern (18) erfolgt, mit Mitteln (30), um die Schwingmassen (12, 14) in eine ebene Schwingung zu versetzen, und mit Auswertemitteln zum Erfassen einer durch den Corioliseffekt aufgrund einer Drehrate senkrecht zu der Ebene der ebenen Schwingung hervorgerufenen ebenen Drehschwingung der Schwingmassen (12, 14) und zum Ermitteln dieser Drehrate, wobei der Drehratensensor in einem einlagigen Aufbau ausgebildet ist, und wobei die Höhen (h) der Biegefedern (18) und der Stege (20) jeweils derart groß im Verhältnis zu ihren Dicken (d) sind, dass auf die Schwingmassen (12, 14) einwirkende Störbeschleunigungen, insbesondere Linearbeschleunigungen, mechanisch gegenüber Drehbewegungen unterdrückbar sind.

2. Drehratensensor nach Anspruch 1, **dadurch gekennzeichnet, dass** zwei mechanisch gekoppelte Schwingmassen (12, 14) eine Schwingungsstruktur (16) bilden, die durch einen elektromagnetischen oder elektrostatischen Kammantrieb (30) in gegenphasiger planarer Oszillation betreibbar ist.

3. Drehratensensor nach Anspruch 1 oder 2, **dadurch gekennzeichnet, dass** die Schwingungsmassen (12, 14) in der Schwingungsebene (28) weich und senkrecht zu der Schwingungsebene (28) steif aufgehängt sind.

4. Drehratensensor nach einem der vorangehenden Ansprüche, **dadurch gekennzeichnet, dass** die Aufhängung der Schwingmassen (12, 14) über symmetrisch angeordnete Biegefedern (18) erfolgt, die mit freien Siliziumstegen (20) verbunden sind.

5. Drehratensensor nach Anspruch 4, **dadurch gekennzeichnet, dass** jede Schwingungsmasse (12, 14) jeweils eine exakt durch den Schwerpunkt verlaufende Biegefeder (18) aufweist.

6. Drehratensensor nach Anspruch 4, **dadurch gekennzeichnet, dass** jede Schwingungsmasse (12, 14) beidseitig jeweils zwei Biegefedern (18) aufweist, die einerseits symmetrisch zu den Schwingmassen (12, 14) befestigt und andererseits mit den freien Siliziumstegen (20) verbunden sind.

7. Drehratensensor nach einem der vorangehenden Ansprüche, **dadurch gekennzeichnet, dass** die freien Siliziumstege (20) über Torsionsfedern (22) über wenigstens einen Befestigungsfuß mit dem Substrat (26) verbunden sind.

8. Drehratensensor nach Anspruch 7, **dadurch gekennzeichnet, dass** die Siliziumstege (20) mittig mit einem zentralen Befestigungspunkt (24) verbunden sind.

9. Drehratensensor nach Anspruch 7, **dadurch gekennzeichnet, dass** die Siliziumstege (20) mittig mit zwei symmetrisch angeordneten äußeren Befestigungsfüßen (48) verbunden sind.

10. Drehratensensor nach einem der vorangehenden Ansprüche, **dadurch gekennzeichnet, dass** die Torsionsfedern (22) in der Schwingungsebene (28) weich und senkrecht zu der Schwingungsebene (28) steif aufgehängt sind.

11. Drehratensensor nach einem der vorangehenden Ansprüche, **dadurch gekennzeichnet, dass** die Torsionsfedern (22) zusätzlich eine quer zu der Schwingungsbewegung federnde Aufhängung, insbesondere eine Zugfeder (50), aufweisen.

12. Drehratensensor nach einem der vorangehenden Ansprüche, **dadurch gekennzeichnet, dass** jeder Schwingmasse (12, 14) ein elektrostatischer Kammantrieb (30) zugeordnet ist.

13. Drehratensensor nach einem der vorangehenden Ansprüche, **dadurch gekennzeichnet, dass** die Schwingmassen (12, 14) einen gemeinsamen, zentral angeordneten Kammantrieb (30) aufweisen.

14. Drehratensensor nach Anspruch 12 oder 13, **dadurch gekennzeichnet, dass** der Kammantrieb (30) über eine den Einfluss des Kammantriebes (30) auf die ermittelte Drehrate minimierende Entkoppelstruktur (80) mit der Schwingstruktur (16) verbunden ist.

15. Drehratensensor nach einem der vorangehenden Ansprüche, **dadurch gekennzeichnet, dass** das Auswertemittel ein kapazitives Auswertemittel ist, das Kapazitäten (C1, C2) aufweist, die von beabstandet übereinander angeordneten Elektroden (74, 76) gebildet werden, wobei die Elektrode (74) an dem von der Schwingungsbewegung der Schwingmassen (12, 14) unbeeinflussten Siliziumsteg (20) der Schwingstruktur (16) und die Elektrode (76) auf dem Substrat (26) angeordnet ist.

16. Drehratensensor nach einem der vorangehenden Ansprüche, **dadurch gekennzeichnet, dass** den Schwingmassen (12, 14) eine Kammstruktur (51) zugeordnet ist, die jeweils einen ineinandergreifenden, feststehenden Kamm (54, 56) und einen beweglichen, mit den Schwingmassen (12, 14) verbundenen Kamm (52) aufweisen, die der Anzeige einer Schwingbewegung dienen.

17. Drehratensensor nach Anspruch 16, **dadurch gekennzeichnet, dass** die Kammstruktur (51) mit den Kämmen (52, 54, 56) Kapazitäten (C1, C2) bildet, die derart mit elektronischen Auswertemitteln verschaltet sind, dass eine bei Betrieb des Drehratensensors auftretende Änderung der Kapazitäten (C1, C2) aufgrund einer linearen Oszillationsbewegung von einer Änderung der Kapazitäten (C1, C2) aufgrund der drehratenbedingten ebenen Drehschwingung der Schwingstruktur (16) separierbar ist.

18. Drehratensensor nach einem der vorangehenden Ansprüche, **dadurch gekennzeichnet, dass** Kammstrukturen (62) vorgesehen sind, die einen fest mit der Schwingstruktur (16) verbundenen Kamm (64) und einen auf dem Substrat (26) angeordneten Kamm (66) aufweisen, die miteinander Kapazitäten (C1, C2) bilden, wobei der Kamm (64) an den Siliziumstegen (20) der Schwingstruktur (16) angeordnet ist, die bei der Schwingung der Schwingmassen (12, 14) einen ruhenden, von der Schwingungsbewegung praktisch unbeeinflusst bleibenden Rahmen bilden.

## Claims

1. Rate-of-rotation sensor having an oscillation structure having two webs (20) which are suspended resiliently from a substrate (base) and from which two oscillatory masses (12, 14) are suspended resiliently, which oscillatory masses can be deflected on account of an acceleration action, the suspension of the oscillatory masses (12, 14) from the webs (20) being effected in each case on both sides by means of bending springs (18), having means (30) for causing the oscillatory masses (12, 14) to effect a planar oscillation, and having evaluation means for detecting a planar rotational oscillation of the oscillatory masses (12, 14) which is brought about by the Coriolis effect on account of a rate of rotation perpendicular to the plane of the planar oscillation, and for determining this rate of rotation, the rate-of-rotation sensor being designed in a monolayer construction, and the heights (h) of the bending springs (18) and of the webs (20) in each case being so large in relation to their thicknesses (d) that disturbing accelerations, in particular linear accelerations, acting on the oscillatory masses (12, 14) can be mechanically suppressed with respect to rotational movements.

2. Rate-of-rotation sensor according to Claim 1, **characterized in that** two mechanically coupled oscillatory masses (12, 14) form an oscillation structure (16) which can be operated by an electromagnetic or electrostatic comb drive (30) in planar oscillation that is in antiphase.

3. Rate-of-rotation sensor according to Claim 1 or 2, **characterized in that** the oscillatory masses (12, 14) are stiffly suspended in the oscillation plane (20) in soft fashion and perpendicular to the oscillation plane (28).

4. Rate-of-rotation sensor according to one of the preceding claims, **characterized in that** the oscillatory masses (12, 14) are suspended by means of symmetrically arranged bending springs (18) connected to free silicon webs (20).

5. Rate-of-rotation sensor according to Claim 4, **characterized in that** each oscillatory mass (12, 14) has in each case a bending spring (18) running exactly through the centre of gravity.

6. Rate-of-rotation sensor according to Claim 4, **characterized in that** each oscillatory mass (12, 14) has on both sides in each case two bending springs (18) which, on the one hand, are fixed symmetrically with respect to the oscillatory masses (12, 14) and, on the other hand, are connected to the free silicon webs (20).

7. Rate-of-rotation sensor according to one of the preceding claims, **characterized in that** the free silicon webs (20) are connected to the substrate (26) by means of torsion springs (22) via at least one fixing foot.

8. Rate-of-rotation sensor according to Claim 7, **characterized in that** the silicon webs (20) are connected centrally to a central fixing point (24).

9. Rate-of-rotation sensor according to Claim 7, **characterized in that** the silicon webs (20) are connected centrally to two symmetrically arranged outer fixing feet (48).

10. Rate-of-rotation sensor according to one of the preceding claims, **characterized in that** the torsion springs (22) are stiffly suspended in the oscillation plane (28) in soft fashion and perpendicular to the oscillation plane (28).

11. Rate-of-rotation sensor according to one of the preceding claims, **characterized in that** the torsion springs (22) additionally have a suspension that is resilient transversely with respect to the oscillation movement, in particular a tension spring (50).

12. Rate-of-rotation sensor according to one of the preceding claims, **characterized in that** each oscillatory mass (12, 14) is assigned an electrostatic comb drive (30).

13. Rate-of-rotation sensor according to one of the preceding claims, **characterized in that** the oscillatory masses (12, 14) have a common, centrally arranged comb drive (30).

14. Rate-of-rotation sensor according to Claim 12 or 13, **characterized in that** the comb drive (30) is connected to the oscillation structure (16) via a decoupling structure (80), which minimizes the influence of the comb drive (30) on the rate of rotation determined.

15. Rate-of-rotation sensor according to one of the preceding claims, **characterized in that** the evaluation means is a capacitive evaluation means having capacitances (C1, C2) formed by electrodes (74, 76), which are arranged spaced apart one above the other, the electrode (74) being arranged at the silicon web (20) of the oscillation structure (16), which silicon web is unaffected by the oscillation movement of the oscillatory masses (12, 14), and the electrode (76) being arranged on the substrate (26).

16. Rate-of-rotation sensor according to one of the preceding claims, **characterized in that** the oscillatory masses (12, 14) are assigned a comb structure (51), which has in each case an intermeshing, stationary comb (54, 56) and a moveable comb (52) connected to the oscillatory masses (12, 14), which serve for indicating an oscillation movement.

17. Rate-of-rotation sensor according to Claim 16, **characterized in that** the comb structure (51) forms, with the combs (52, 54, 56), capacitances (C1, C2) which are connected up to electronic evaluation means in such a way that a change - occurring during operation of the rate-of-rotation sensor - in the capacitances (C1, C2) on account of a linear oscillation movement can be separated from a change in the capacitances (C1, C2) on account of the rate-of-rotation-dictated planar rotational oscillation of the oscillation structure (16).

18. Rate-of-rotation sensor according to one of the preceding claims, **characterized in that** comb structures (62) are provided, which have a comb (64) fixedly connected to the oscillation structure (16) and a comb (66) arranged on the substrate (26), which form capacitances (C1, C2) with one another, the comb (64) being arranged at the silicon webs (20) of the oscillation structure (16) which, during the oscillation of the oscillatory masses (12, 14), form a static frame which remains practically unaffected by the oscillation movement.

**Revendications**

1. Capteur de vitesse de rotation ayant une structure oscillante comprenant deux entretoises (20) suspendues à un support (base) et auxquelles sont accrochées de manière élastique deux masses oscillantes (12, 14) qui peuvent être déviées par une action d'accélération,
la suspension des masses oscillantes (12, 14) aux entretoises (20) se fait chaque fois des deux côtés par des ressorts de flexion (18),
des moyens (30) pour faire vibrer les masses oscillantes (12, 14) selon une vibration plane et des moyens d'exploitation pour saisir une oscillation de rotation plane des masses oscillantes (12, 14) produite par l'effet de Coriolis du fait d'une vitesse de rotation perpendiculaire au plan de l'oscillation plane, et pour déterminer cette vitesse de rotation,
dans lequel
le capteur de vitesse de rotation a une structure à une couche et
les hauteurs (h) des ressorts de flexion (18) et des entretoises (20) ont par rapport à leur épaisseur (d), un rapport tellement grand que les accélérations de perturbation agissant sur les masses oscillantes (12, 14), notamment les accélérations linéaires, sont éliminées mécaniquement par rapport aux mouvements de rotation.

2. Capteur de vitesse de rotation selon la revendication 1,
**caractérisé en ce que**
deux masses oscillantes (12, 14) couplées mécaniquement forment une structure oscillante (16) entraînée par un entraînement à peigne (30) électromagnétique ou électrostatique suivant une oscillation plane en opposition de phase.

3. Capteur de vitesse de rotation selon l'une quelconque des revendications 1 ou 2,
**caractérisé en ce que**
les masses oscillantes (12, 14) sont suspendues de manière souple dans le plan d'oscillation (28) et de manière rigide, perpendiculairement au plan d'oscillation (28).

4. Capteur de vitesse de rotation selon l'une quelconque des revendications précédentes,
**caractérisé en ce que**
la suspension des masses oscillantes (12, 14) est faite par des ressorts de flexion (18) installés de manière symétrique, et reliés à des entretoises de silicium (20) libres.

5. Capteur de vitesse de rotation selon la revendication 4,
**caractérisé en ce que**
chaque masse oscillante (12, 14) comporte un ressort de flexion (18) passant chaque fois exactement par le centre de gravité.

6. Capteur de vitesse de rotation selon la revendication 4,
**caractérisé en ce que**
chaque masse oscillante (12, 14) comporte des deux côtés chaque fois deux ressorts de flexion (18) qui sont d'un côté fixés de manière symétrique par rapport aux masses oscillantes (12, 14), et de l'autre reliés aux entretoises de silicium (20) libres.

7. Capteur de vitesse de rotation selon l'une quelconque des revendications précédentes,
**caractérisé en ce que**
les entretoises de silicium libres (20), sont reliées par des ressorts de torsion (22) par au moins un pied de fixation au support (26).

8. Capteur de vitesse de rotation selon la revendication 7,
**caractérisé en ce que**
les entretoises en silicium (20) sont reliées au milieu à un point de fixation central (24).

9. Capteur de vitesse de rotation selon la revendication 7,
**caractérisé en ce que**
les entretoises en silicium (20) sont reliées au milieu à deux pieds de fixation (48) extérieurs, symétriques.

10. Capteur de vitesse de rotation selon l'une quelconque des revendications précédentes,
**caractérisé en ce que**
les ressorts de torsion (22) sont suspendus de manière souple dans le plan d'oscillation (28) et de manière rigide perpendiculairement au plan d'oscillation (28).

11. Capteur de vitesse de rotation selon l'une quelconque des revendications précédentes,
**caractérisé en ce que**

les ressorts de torsion (22) comportent en outre une suspension élastique, notamment un ressort de traction (50) transversal au plan d'oscillation.

**12.** Capteur de vitesse de rotation selon l'une quelconque des revendications précédentes,
**caractérisé en ce qu'**
à chaque masse oscillante (12, 14) est associé un entraînement en peigne (30), électrostatique.

**13.** Capteur de vitesse de rotation selon l'une quelconque des revendications précédentes,
**caractérisé en ce que**
les masses oscillantes (12, 14) ont un entraînement en peigne (30), commun, installé de manière centrale.

**14.** Capteur selon l'une quelconque des revendications 12 ou 13,
**caractérisé en ce que**
l'entraînement en peigne (30) est relié par une structure de découplage (80) minimisant l'influence de l'entraînement en peigne (30) sur la vitesse de rotation obtenue, à la structure oscillante (16).

**15.** Capteur de vitesse de rotation selon l'une quelconque des revendications précédentes,
**caractérisé en ce que**
le moyen d'exploitation est un moyen d'exploitation capacitif comportant des capacités (C1, C2) formées par des électrodes (74, 76) superposées avec intervalles, l'électrode (74) étant montée sur la branche de silicium (20) de la structure oscillante (16), non influencée par le mouvement d'oscillation des masses oscillantes (12, 14) et l'électrode (76) est installée sur le substrat (26).

**16.** Capteur de vitesse de rotation selon l'une quelconque des revendications précédentes,
**caractérisé en ce qu'**
une structure en peigne (51) est associée aux masses oscillantes (12, 14), cette structure ayant chaque fois un peigne fixe (54, 56) imbriqué et un peigne (52), mobile, relié aux masses oscillantes (12, 14), ces peignes servant pour l'affichage d'un mouvement d'oscillation.

**17.** Capteur selon la revendication 16,
**caractérisé en ce que**
la structure en peigne (51) forme des capacités (C1, C2) avec les peignes (52, 54, 56), ces capacités étant combinées aux moyens d'exploitation électroniques de manière à pouvoir distinguer une variation des capacités (C1, C2) produites par le fonctionnement du capteur de vitesse de rotation, du fait d'un mouvement d'oscillation linéaire par rapport à une variation des capacités (C1, C2) reposant sur une oscillation de rotation plane liée à la vitesse de rotation de la structure oscillante (16).

**18.** Capteur de vitesse de rotation selon l'une quelconque des revendications précédentes,
**caractérisé par**
des structures en peigne (62) ayant un peigne (64) relié solidairement à la structure oscillante (16) et un peigne (66) porté par le substrat (26), ces peignes formant des capacités (C1, C2), le peigne (64) étant prévu sur l'entretoise de silicium (20) de la structure oscillante (16) qui lors de l'oscillation des masses oscillantes (12, 14) forme un cadre au repos, pratiquement non influencé par le mouvement d'oscillation.

Fig. 1

Fig. 2

Fig. 3

Fig. 4

Fig.5

Fig. 6

Fig. 7

EP 0 765 464 B1

Fig. 8

Fig. 9

EP 0 765 464 B1